# EUROPÄISCHE PATENTSCHRIFT

(11) **EP 0 850 819 B1**
(45) Veröffentlichungstag und Bekanntmachung des Hinweises auf die Patenterteilung: **04.07.2001**
(21) Anmeldenummer: 97122001.7
(22) Anmeldetag: 13.12.1997
(51) Int. Cl.: B62D 13/00, B62D 3/14

(54) **Hydraulische Lenkung**
Hydraulic steering
Direction hydraulique

(30) Priorität: 30.12.1996 DE 29622440 U
(43) Veröffentlichungstag der Anmeldung: 01.07.1998
(73) Patentinhaber: Paul, Josef, D-94474 Vilshofen (DE)
(72) Erfinder: Paul, Josef, D-94474 Vilshofen (DE)
(74) Vertreter: Matschkur, Lindner Blaumeier Patent- und Rechtsanwälte

(56) Entgegenhaltungen:
- EP-A- 0 477 816
- DE-C- 662 749
- US-A- 3 444 936
- US-A- 4 031 967
- US-A- 4 475 615

## Beschreibung

Die Erfindung bezieht sich auf eine hydraulische Lenkung für Vor- oder Nachlaufachsen von LKWs, insbesondere für Fahrzeuge der Mercedes-Benz-Baureihe "Actros" und andere Baureihen der neuen Kategorie, mit einem zweikammerigen, kardanisch am Fahrgestell aufgehängten Geberzylinder, dessen Kolben an den Lenkstockhebel angeschlossen ist und dessen beide Kammern über Hydraulikleitungen mit den Verstellkammern eines an der Lenkachse, vorzugsweise kardanisch, aufgehängten Nehmerzylinders verbunden sind, wobei der Geberzylinder über ein am Außenumfang montiertes Gelenk-lager an einem am Fahrgestell befestigten Halter aufgehängt ist, das einen auf einem den Geberzylider umgebenden Befestigungsrohr befestigten Kugelkalottenring und entsprechende, Lagerschalen bildende Gegenringe umfaßt, die durch Befestigungsglieder gegen einen starren Anschlag in einem Tragrohr verspannbar sind. Eine derartige hydraulische Lenkung ist aus der US-A-4 031 967 bekannt geworden, wobei auf jeden Fall die Gegenringe geteilt sein sollen um die Teile einfacher auf dem Außenumfang des Geberzylinders montieren zu können.

Bei der Anordnung nach der US-A-4 031 967 erfolgt die Befestigung des außenliegenden Gegenrings durch einen nach außen ragenden Flansch am Tragrohr. Dies wiederum bringt es mit sich, daß zum Ausgleich der Toleranzen Ringscheiben zwischen der Stirnfläche des Tragrohrs und dem Flansch des außenliegenden Gegenrings notwendig sind. Da aber die Toleranzen von vorneherein nicht festliegen, ist es außerordentlich umständlich durch Ausprobieren oder umständliches Ausmessen der schwer zugänglichen Spalte zwischen diesen Teilen die richtige Stärke der Toleranzringe zu finden. Hinzu kommt noch, daß unter den rauhen Betriebsbedingungen, denen derartige hydraulische Lenkungen ausgesetzt sind, selbstverständlich ein nicht unerheblicher Abrieb stattfindet, so dass periodisch ein Nachstellen erforderlich ist. Dies wiederum erfordert bei der Anordnung nach der US-A-4 031 967 nicht nur ein Zerlegen der Teile, sondern ein ebenso mühsames Aussuchen einer wiederum passenden dünneren Distanzscheibe, so dass die Gegenringe den Kugelkalottenring praktisch spielfrei aufnehmen.

Der Erfindung liegt daher die Aufgabe zugrunde, eine hydraulische Lenkung der eingangs genannten Art dahingehend weiterzubilden, daß eine einfachere Herstellung und Montage und ein einfacheres Nachjustieren der kardanischen Aufhängung möglich ist.

Zur Lösung dieser Aufgabe ist erfindungsgemäß vorgesehen, daß das Tragrohr über den äußeren Gegenring axial übersteht und mit einem Innengewindeabschnitt versehen ist, und daß die Befestigungsglieder durch einen Schraubring gebildet sind, der in den Innengewindeabschnitt des Tragrohrs einschraubbar ist.

Durch diese Ausbildung, bei der der äußere Gegenring im Tragrohr frei verschiebbar, also nicht mit einem Flansch auf das Stirnende des Tragsrohrs aufgeschraubt ist, kann jederzeit und ohne Mühen nur durch Verdrehen des Schraubrings eine optimale Anpassung des gewünschten Spiels oder auch Nichtspiels des Kugelkalottenrings in den die Lagerschalen bildenden Gegenringen ein- und nachgestellt werden. Es bedarf keines mühsamen Ausprobierens, welcher von mehreren unterschiedlich dicken Ausgleichsringen hierfür geeignet wäre, wie dies bei der US-A-4 031 967 der Fall ist.

In Ausgestaltung der Erfindung kann vorgesehen sein, daß der Kugelkalottenring durch einen auf das Befestigungsrohr aufschraubbaren Schraubring gegen einen starren Anschlag auf dem Befestigungsrohr verspannbar ist.

Dabei kann - entsprechend der Teilung des Gegenrings - auch der Kugelkalottenring geteilt und die Teile durch einen Spalt getrennt sein, der durch einen Distanzring ausgefüllt ist.

In Verbindung mit einer Schmierbohrung der Gegenringe in der Trennebene, die bei einer Ausgestaltung der Erfindung mit einem Schmiernippel eines die Gegenringe umgebenden Tragrohrs fluchten kann, ergibt sich somit eine einfache Schmiermöglichkeit für das im Betrieb ständig belastete und ständig bewegte Kardangelenk.

Schließlich liegt es auch noch im Rahmen der Erfindung, auf benachbarte Enden des Befestigungsrohrs und des Tragrohrs jeweils Dichtmanschetten aufzusetzen, die die Gelenklager nach außen beweglich abdichten.

Mit Vorteil kann der Geberzylinder mit einer Verdreharretierung versehen sein, die gemäß einem bevorzugten Ausführungsbeispiel derart ausgebildet sein kann, daß in einer Verschraubung des Tragrohrs eine von einer Feder beaufschlagte, in eine achsparallele Rinne des Geberzylindermantels eingreifende Kugel geführt ist.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

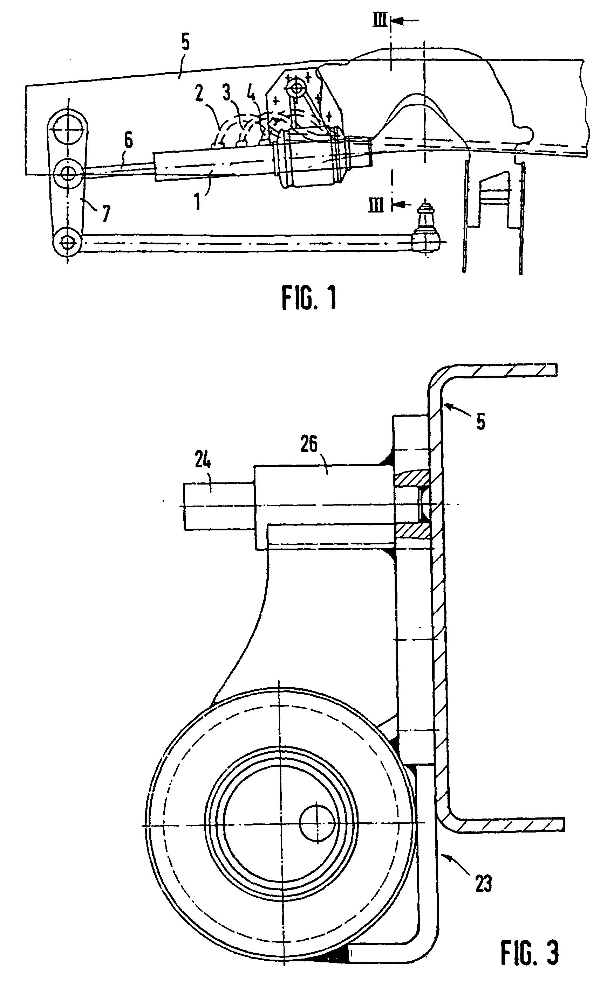

- Fig. 1: eine schematische Teilseitenansicht des Fahrgestells mit dem am Lenkstockhebel angelenkten und am Fahrgestell kardanisch aufgeängten Geberzylinder,
- Fig. 2: einen vergrößerten Längsschnitt durch den Geberzylinder,
- Fig. 3: eine teilweise geschnittene vergrößerte Rückansicht längs der Linie III-III in Fig. 1,
- Fig. 4: einen der Fig. 2 entsprechenden vergrößerten Längsschnitt durch den Geberzylinder bei abgewandelter Ausbildung des Gelenklagers, und
- Fig. 5: einen Schnitt längs der Linie V-V in Fig. 4.

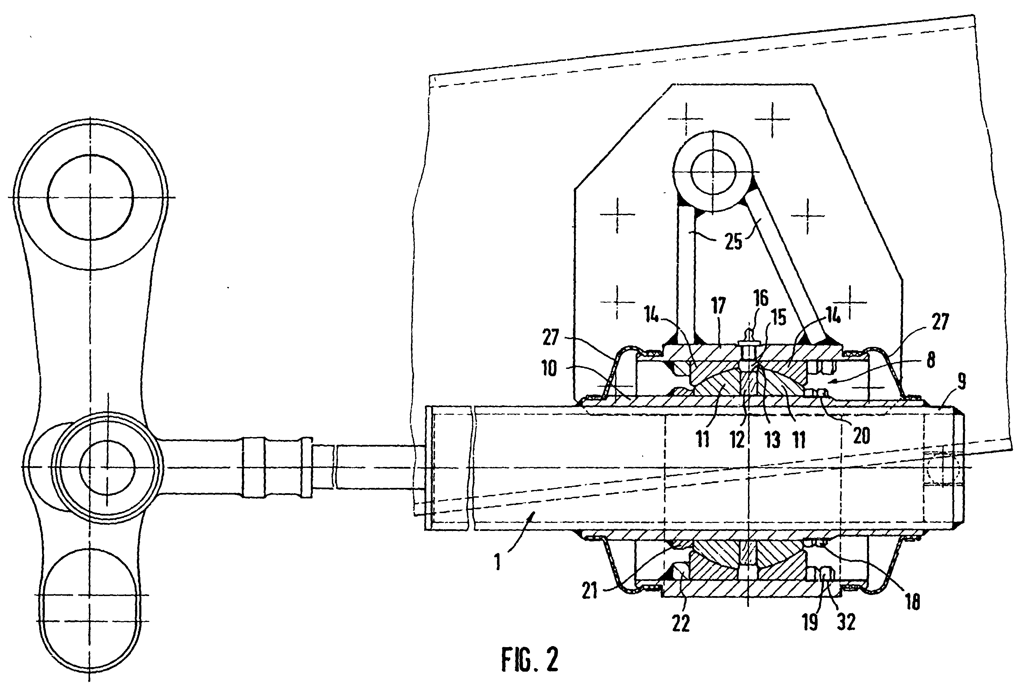

Der Geberzylinder 1 mit einer Reihe von nur schematisch angedeuteten abgehenden Hydraulikleitungen 2, 3 und 4 ist über ein außen auf seinen Umfang aufgesetztes Gelenklager am Fahrgestell 5 eines LKW aufgehängt, so daß er, der mit seiner Kolbenstange 6 am Lenkstockhebel 7 gelenkig befestigt ist, den Bewegungen des Lenkstockhebels der Vorderachse folgen und dabei um die kardanische Aufhängung verschwenken kann. Zur Verkürzung der Ausbildung dieses Geberzylinders 1 mit der erforderlichen kardanischen Aufhängung ist statt der bisher üblichen Befestigung eines Kugelkopfs am hinteren Ende des Geberzylinders 1 ein auf dessen Außenumfang aufgesetztes Gelenklager 8 vorgesehen. Dieses Gelenklager 8 sitzt auf einem auf den Geberzylindermantel 9 aufgeschweißten Befestigungsrohr 10. Es umfaßt Kugelkalottenringe 11, die durch einen von einem Distanzring 12 ausgefüllten Spalt 13 getrennt sind, und die Kugelkalottenringe 11 umgebende, eine Lagerschale für diese bildende Gegenringe 14. Die Gegenringe 14 sind im Bereich der Trennebene der Ringe mit einer Schmierbohrung 15 versehen, die wiederum mit einem Schmiernippel 16 eines die Gegenringe umgebenden und halternden Tragrohrs 17 fluchtet. Die Befestigung der Kugelkalottenringe und der Gegenringe auf dem Befestigungsohr 10 bzw. im Tragrohr 17 erfolgt durch Gewinderinge 18 bzw. 19, die auf Außengewindeabschnitte 20 des Befestigungsrohrs 10 bzw. Innengewindeabschnitte 32 des Tragrohrs 17 aufgeschraubt werden. Beim Aufschrauben werden die Kugelkalottenringe 11 bzw. die Gegenringe 14 an starre angeschweißte Anschlagringe 21 bzw. 22 angedrückt und gehaltert. Das Tragrohr 17 ist an einem L-förmigen Halter 23 am Fahrgestell 5 mit Hilfe eines Aufhängebolzens 24 und einer Reihe von Befestigungsschrauben, die in Fig. 2 lediglich angedeutet sind, starr befestigt, wobei die Befestigung durch Knotenbleche 25 versteift ist, die am Tragrohr 17, an der Aufhängehülse 26 und am Halter 23 verschweißt sind. Das Gelenklager 8 ist durch flexible Dichtmanschetten 27, die auf jeweils benachbarte Enden des Befestigungsrohrs 10 und des Tragrohrs 17 aufgebracht und dort verspannt sind, abgedichtet. Diese Manschetten behindern die freie kardanische Verschwenkbarkeit des Geberzylinders 1 mit den darauf befestigten Kugelkalottenringen im starren, durch die Gegenringe 14 gebildeten Lager nicht. Sie dichten aber dieses Gegenlager 8 gegen Verschmutzung ab, nachdem der Geberzylinder und dieses Gegenlager 8 frei am Fahrzeugrahmen in der Nähe der Vorderräder liegt und somit einer starken Verschmutzung unterliegt.

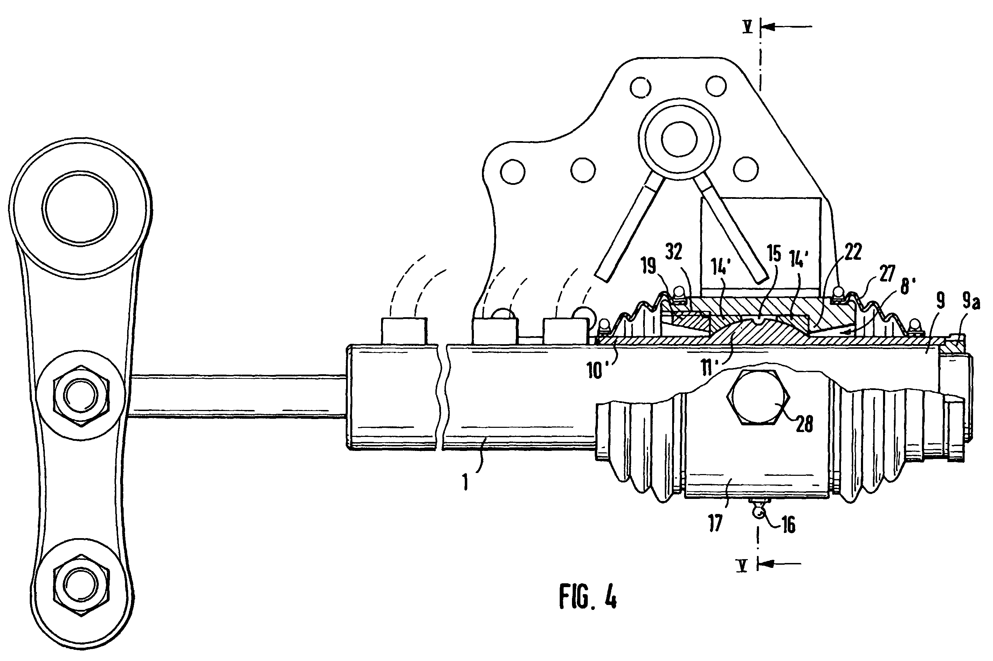

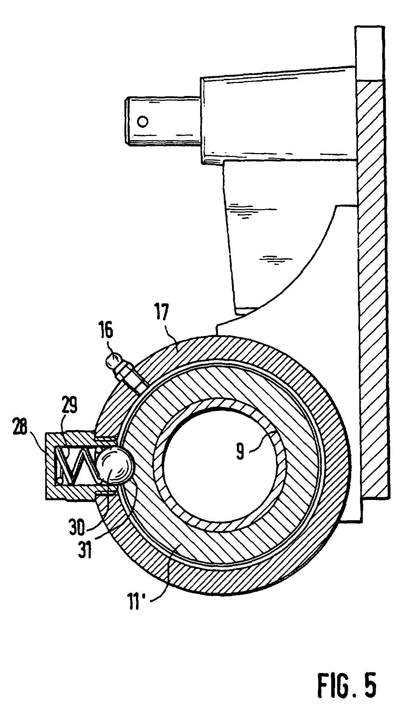

Bei dem in den Figuren 4 und 5 dargestellten abgewandelten Ausführungsbeispiel sitzt das Gelenklager 8' wiederum auf einem auf den Geberzylindermantel 9 mit einer Mutter 9a aufgeschraubten Befestigungsrohr 10'. Es umfaßt den Kugelkalottenabschnitt 11' mit den Gegenringen 14'. Die Gegenringe 14' sind im Bereich der Trennebene wiederum mit einer Schmierbohrung 15 versehen, die wiederum mit einem Schmiernippel 16 eines die Gegenringe 14' umgebenden und halternden Tragrohrs 17 fluchtet. Der Kugelkalottenabschnitt 11' ist am Befestigungsrohr 10' angeformt und die Gegenringe 14' sind durch einen Gewindering 19 befestigt, der auf dem Innengewindeabschnitt 32 des Tragrohrs 17 aufgeschraubt ist. Beim Aufschrauben werden die Gegenringe 14' an einen starren angeschweißten Anschlagring 22 angedrückt und gehaltert.

Gegen das Verdrehen des Geberzylinders 1 ist zusätzlich eine Arretierung montiert, die aus einer Verschraubung 28 in einer Bohrung des Tragrohrs 17, einer Feder 29 und einer Kugel 30 besteht. Um die kardanische Bewegung des Geberzylinders mit der Kugel 30 nicht einzuschränken, ist diese im Drehzentrum in einer achsparallelen Rinne 31 des Kugelkalottenabschnitts 11'geführt.

## Patentansprüche

1. Hydraulische Lenkung für Vor- oder Nachlaufachsen von LKWs, insbesondere für Fahrzeuge der Mercedes-Benz-Baureihe "Actros" und andere Baureihen der neuen Kategorie, mit einem zweikammerigen, kardanisch am Fahrgestell aufgehängten Geberzylinder, dessen Kolben an den Lenkstockhebel angeschlossen ist und dessen beide Kammern über Hydraulikleitungen mit den Verstellkammern eines an der Lenkachse, vorzugsweise kardanisch, aufgehängten Nehmerzylinders verbunden sind, wobei der Geberzylinder (1) über ein am Außenumfang montiertes Gelenklager an einem am Fahrgestell (5) befestigten Halter (23) aufgehängt ist, das einen auf einem den Geberzylider (1) umgebenden Befestigungsrohr (10) befestigten Kugelkalottenring (11) und entsprechende, Lagerschalen bildende Gegenringe (14, 14') umfaßt, die durch Befestigungsglieder gegen einen starren Anschlag (22) in einem Tragrohr (17) verspannbar sind, dadurch gekennzeichnet, daß das Tragrohr über den äußeren Gegenring (14, 14') axial übersteht und mit einem Innengewindeabschnitt (32) versehen ist, und daß die Befestigungsglieder durch einen Schraubring (19) gebildet sind, der in dem Innengewindeabschnitt (32) des Tragrohrs (17) einschraubbar ist.

2. Hydraulische Lenkung nach Anspruch 1, dadurch gekennzeichnet, daß der Kugelkalottenring (11) durch einen auf das Befestigungsrohr (10) aufschraubbaren Schraubring (18) gegen einen starren Anschlag (21) auf dem Befestigungsrohr (10) verspannbar ist.

3. Hydraulische Lenkung nach Anspruch 2, dadurch gekennzeichnet, daß der Kugelkalottenring (11) geteilt und die Teile durch einen Spalt (13) getrennt sind, der durch einen Distanzring (12) ausgefüllt ist.

4. Hydraulische Lenkung nach einem der Ansprüche 1 bis 3, dadurch gekennzeichnet, daß die Gegenringe (14, 14') in der Trennebene mit einer Schmierbohrung (15) versehen sind, die mit einem Schmiernippel (16) eines sie umgebenden und halternden, starr am Halter (23) befestigten Tragrohrs (17) fluchtet.

5. Hydraulische Lenkung nach einem der Ansprüche 2 bis 4, gekennzeichnet durch in an sich bekannter Weise auf benachbarte Enden des Befestigungsrohrs (10) und des Tragrohrs (17) aufgesetzte Dichtmanschetten (27).

6. Hydraulische Lenkung nach einem der Ansprüche 1 bis 5, dadurch gekennzeichnet, daß der Geberzylinder (1) mit einer Verdreharretierung versehen ist.

7. Hydraulische Lenkung nach Anspruch 6, dadurch gekennzeichnet, daß in einer Verschraubung (28) des Tragrohres (17) eine von einer Feder (29) beaufschlagte, in eine achsparallele Rinne (31) des Kugelkalottenabschnitts (11') eingreifende Kugel (30) geführt ist.

## Claims

1. Hydraulic steering for front or rear axles of HGVs, in particular for vehicles of the Mercedes-Benz series "Actros" and other series of the new category, having a dual-chamber master cylinder which is suspended cardanically on the chassis and whose piston is connected to the steering lever and whose two chambers are connected via hydraulic lines to the displacement chambers of a slave cylinder suspended preferably cardanically on the steering axle, wherein the master cylinder (1) is suspended via a hinge bearing which is mounted on the outer circumference on a support (23) fixed to the chassis (5) and which comprises a universal ball joint ring (11) fixed on a fixing tube (10) surrounding the master cylinder (1) and corresponding counter-rings (14, 14'), which form bearing shells and which are capable of being braced against a rigid stop (22) in a carrying tube (17), characterised in that the carrying tube projects axially beyond the outer counter-ring (14, 14') and is provided with a female-threaded section (32), and in that the fixing members are formed by a screw ring (19), which can be threaded on to the female-threaded section (32) of the carrying tube (17).

2. Hydraulic steering according to claim 1, characterised in that the universal ball joint ring (11) is capable of being braced against a rigid stop (21) on the fixing tube (10) by a screw ring (18) capable of being screwed on to the fixing tube (10).

3. Hydraulic steering according to claim 2, characterised in that the universal ball joint ring (11) is divided, and the parts are separated by a gap (13) filled by a spacer ring (12).

4. Hydraulic steering according to one of claims 1 to 3, characterised in that the counter-rings (14, 14') are provided in the plane of separation with a lubrication bore (15), which is flush with a lubricating nipple (16) of a carrying tube (17) fixed rigidly to the support (23) and surrounding and supporting the said bore.

5. Hydraulic steering according to one of claims 2 to 4, characterised by sealing collars (27) mounted in a manner known *per se* on adjacent ends of the fixing tube (10) and of the carrying tube (17).

6. Hydraulic steering according to one of claims 1 to 5, characterised in that the master cylinder (1) is provided with an anti-twist device.

7. Hydraulic steering according to claim 6, characterised in that a ball (30), on which a spring (29) acts and which engages in a groove (31) in the universal ball joint section (11') parallel to the axis is guided in a screw joint (28) of the carrying tube (17).

## Revendications

1. Direction hydraulique pour des essieux moteurs ou des essieux porteurs de camions, notamment pour des véhicules de la gamme "Actros" de Mercedes-Benz et d'autres gammes de la nouvelle catégorie, comportant un cylindre émetteur à deux chambres, suspendu au châssis par un joint à cardan, cylindre émetteur dont le piston est raccordé au levier de commande de direction et dont les deux chambres sont reliées, par l'intermédiaire de conduits hydrauliques, aux chambres de réglage d'un cylindre récepteur suspendu, de préférence par un joint à cardan, à l'essieu directeur, le cylindre émetteur (1) étant suspendu à un support (23), fixé au châssis (5), par l'intermédiaire d'une articulation à rotule qui est montée sur sa surface périphérique extérieure et qui comprend un anneau à enveloppe sphérique (11) fixé sur un tube de fixation (10), entourant le cylindre émetteur (1), et des contre-anneaux correspondants (14, 14') formant des coussinets de palier, qui peuvent être bloqués par serrage contre une butée rigide (22), au moyen d'organes de fixation, dans un tube support (17), caractérisée en ce que le tube support s'étend axialement au-delà du contre-anneau extérieur (14, 14') et est pourvu d'un tronçon à filetage intérieur (32), et en ce que les organes de fixation sont constitués par une bague filetée (19), qui peut être vissée dans le tronçon à filetage intérieur (32) du tube support (17).

2. Direction hydraulique selon la revendication 1, caractérisée en ce que l'anneau à enveloppe sphérique (11) peut être bloqué par serrage contre une butée rigide (21) située sur le tube de fixation (10), au moyen d'une bague filetée (18) pouvant être vissée sur le tube de fixation (10).

3. Direction hydraulique selon la revendication 2, caractérisée en ce que l'anneau à enveloppe sphérique (11) est partagé et les parties sont séparées par une fente (13), qui est occupée par une bague d'écartement (12).

4. Direction hydraulique selon l'une des revendications 1 à 3, caractérisée en ce que les contre-anneaux (14, 14') sont, dans le plan de séparation, pourvus d'un trou de graissage (15), qui est dans l'alignement d'un graisseur (16) d'un tube support (17) qui les entoure et les retient et qui est fixé rigidement au support (23).

5. Direction hydraulique selon l'une des revendications 2 à 4, caractérisée par des gaines d'étanchéité (27) posées, d'une manière connue en soi, sur des extrémités voisines du tube de fixation (10) et du tube support (17).

6. Direction hydraulique selon l'une des revendications 1 à 5, caractérisée en ce que le cylindre émetteur (1) est pourvu d'un élément de blocage en rotation.

7. Direction hydraulique selon la revendication 6, caractérisée en ce que dans un élément assemblé par vissage (28) du tube support (17), est guidée une bille (30) chargée par un ressort (29) et s'engageant dans une gorge (31), parallèle à l'axe, du tronçon à enveloppe sphérique (11').
